# EUROPÄISCHE PATENTSCHRIFT

(11) **EP 1 302 706 B1**
(45) Veröffentlichungstag und Bekanntmachung des Hinweises auf die Patenterteilung: **29.06.2005**
(21) Anmeldenummer: 02019950.1
(22) Anmeldetag: 05.09.2002
(51) Int. Cl.: F16H 61/32, F16H 63/30

(54) **Schaltgetriebe**
Transmission
Boîte de vitesses

(30) Priorität: 10.10.2001 DE 10150054
(43) Veröffentlichungstag der Anmeldung: 16.04.2003
(73) Patentinhaber: Bayerische Motoren Werke Aktiengesellschaft, 80809 München (DE)
(72) Erfinder: Körber, Martin, 85375 Neufahrn (DE); Bassner, Heinz, 85757 Karlsfeld (DE)

(56) Entgegenhaltungen:
- DE-A- 4 335 754
- DE-A- 10 235 404
- DE-A- 19 920 064
- US-A- 1 928 782
- US-A- 2 893 256
- US-A- 3 495 473
- US-A- 4 449 416
- US-A- 4 621 536
- PATENT ABSTRACTS OF JAPAN Bd. 0103, Nr. 65 (M-542), 6. Dezember 1986 (1986-12-06) -& JP 61 160652 A (HINO MOTORS LTD), 21. Juli 1986 (1986-07-21)

## Beschreibung

Die vorliegende Erfindung betrifft ein Schaltgetriebe gemäß dem Oberbegriff des Patentanspruches 1.

Aus der DE 199 20 064 C2 ist ein Zahnradwechselgetriebe für Kraftfahrzeuge bekannt, das alle Merkmale des Oberbegriffs des unabhängigen Anspruchs 1 enthält. Auf einer Eingangswelle sind zwei Zahnradpaare drehbar angeordnet, die in bekannter Weise über eine Schiebemuffe und ein zugeordnetes Festrad mit der Eingangswelle koppelbar sind. Die drehbar auf der Eingangswelle gelagerten Zahnräder befinden sich jeweils in Dauereingriff mit zugeordneten Zahnrädern, die fest mit einer Ausgangswelle verbunden sind. Zum Schalten der beiden Schiebemuffen ist eine einzige Schaltstange vorgesehen. Auf der Schaltstange sind relativ verschieblich dazu zwei den beiden Schiebemuffen zugeordnete Schaltgabeln vorgesehen, die wahlweise über elektromagnetische Aktuatoren mit der Schaltstange koppelbar sind. Durch Betätigen eines der beiden Aktuatoren schiebt sich ein der Schaltgabel zugeordneter Stift in eine Aussparung der Schaltstange und stellt eine formschlüssige Verbindung zwischen der Schaltgabel und der Schaltstange her. Wird die Schaltstange axial verschoben, so wird die jeweilige Schaltgabel und die zugeordnete Schaltmuffe mitgenommen. Die elektromagnetischen Aktuatoren bilden also eine "innere Schaltung" des Getriebes.

Bei einem derartigen Getriebe sind alle Schaltkörper, d.h. jede Schaltgabel bzw. jede Schaltschwinge einer einzigen Schaltstange zugeordnet. Eine gleichzeitige Bewegung mehrerer Schaltkörper in unterschiedliche Schaltrichtungen ist hiermit nicht möglich.

Aufgabe der Erfindung ist es, ein Schaltgetriebe mit erweiterten "Schaltfreiheitsgraden" zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Schaltgetriebe, bei dem einzelnen Schaltkörpern, d.h. Schaltgabeln bzw. Schaltschwingen, jeweils zwei separate Betätigungseinrichtungen zugeordnet sind. Ein Schaltkörper, d.h. eine Schaltgabel bzw. eine Schaltschwinge, kann wahlweise durch die eine oder die andere Betätigungseinrichtung betätigt werden. Die Betätigungseinrichtungen sind Schaltstangen.

Die Schaltstangen verlaufen im wesentlichen parallel nebeneinander durch Ausnehmungen der Schaltkörper. An den einzelnen Schaltkörpern sind jeweils zwei den beiden Schaltstangen zugeordnete z.B. elektromagnetisch oder mechanisch betätigbare Aktuatoren vorgesehen. Durch Betätigen der Aktuatoren kann eine Kopplung zwischen der Schaltstange und dem Schaltkörper hergestellt werden.

Ein wesentlicher Vorteil der Erfindung gegenüber dem eingangs genannten Stand der Technik besteht darin, dass zwei koaxial angeordnete Schaltkörper gleichzeitig geschaltet werden können, insbesondere in unterschiedliche Schaltrichtungen.

Die Schaltelemente sind durch die elektromagnetischen Aktuatoren mit den Schaltstangen koppelbar. Das heißt, in ausgekoppeltem Zustand sind die Schaltstangen relativ zu den Schaltkörpern verschieblich. Nach einer Weiterbildung der Erfindung ist vorgesehen, dass die Schaltkörper nicht nur in einer ganz bestimmten Relativstellung mit einer Schaltstange koppelbar sind, sondern dass es mehrere "Schiebestellungen" der Schaltstange gibt, in denen eine Kopplung der Schaltstange mit dem Schaltkörper möglich ist. Hierzu können in der Schaltstange mehrere Ausnehmungen vorgesehen sein, in die ein zugeordneter Aktuator des Schaltkörpers eingreifen kann. Vorzugsweise entspricht die Anzahl der Ausnehmungen der Schaltstange im Bereich eines Aktuators der Anzahl der Schaltstellungen des zugeordneten Schaltkörpers. Eine Schaltgabel bzw. eine Schaltschwinge hat üblicherweise eine Neutralstellung und zwei Schaltstellungen. In diesem Fall würde die Schaltstange im Bereich des Schaltkörpers drei Ausnehmungen aufweisen.

Vorzugsweise sind die Schaltstangen unabhängig voneinander betätigbar. Es kann aber auch vorgesehen sein, dass die Schaltstangen gleichzeitig aber nur in unterschiedlichen "Schieberichtungen" betätigbar sind.

Nach einer Weiterbildung der Erfindung sind die Schaltstangen durch ein mechanisches Kopplungselement miteinander gekoppelt. Durch die mechanische Kopplung der beiden Schaltstangen können sie durch ein einziges Stellglied, z.B. einen einzigen Hydraulikzylinder oder einen elektrischen Stellmotor, gegenläufig betätigt werden. Das Kopplungselement kann beispielsweise ein im Getriebe gelagerter Schwinghebel oder ein Zahnrad sein, das mit Zahnstangenabschnitten der beiden Schaltstangen kämmt.

Im folgenden wird die Erfindung an Hand von Ausführungsbeispielen im Zusammenhang mit der Zeichnung näher erläutert. Es zeigen:
- Figur 1: einen Ausschnitt aus einem Getriebe im Bereich einer Schaltgabel in Seitenansicht;
- Figur 2: eine Ansicht in Axialrichtung der Figur 1;
- Figur 3: eine Draufsicht der Figuren 1 bzw. 2;
- Figur 4: eine Variante der Erfindung mit einer Schaltschwinge; und
- Figuren 5-8: verschiedene Varianten von Kopplungselementen.

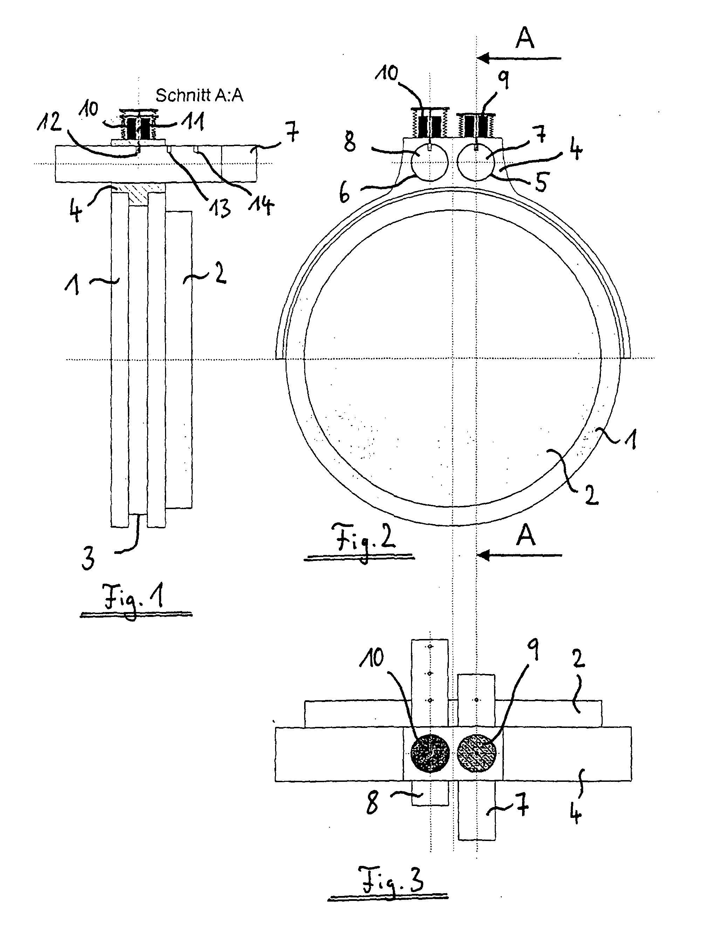

Die **Figuren 1 bis 3** zeigen eine Schiebemuffe 1, die drehfest aber axial verschieblich auf einer Festmuffe 2 einer Getriebewelle angeordnet ist. Am Außenumfang der Schiebemuffe 1 ist eine umlaufende Nut 3 vorgesehen, in die formschlüssig eine Schaltgabel 4 eingreift. Die Schaltgabel 4 weist zwei Durchgangsbohrungen 5, 6 auf, durch die sich Schaltstangen 7, 8 hindurch erstrecken. Die Schaltstangen 7, 8 sind also relativ verschieblich bezüglich der Schaltgabel 4.

An der Oberseite der Schaltgabel 4 sind zwei elektromagnetische Aktuatoren 9, 10 vorgesehen. Die elektromagnetischen Aktuatoren 9, 10 weisen jeweils einen durch Druckfedern in eine "Neutralstellung" vorgespannten Kopplungsstift 11 auf, sowie einen Elektromagneten, zum Verschieben des Kopplungsstifts 11 entgegen der Federkraft.

An den Schaltstangen 7, 8 sind jeweils drei Ausnehmungen 12-14 vorgesehen. Durch Aktivieren eines der beiden elektromagnetischen Aktuatoren 9, 10 können die Kopplungsstifte 11 "in Eingriff" mit einer der Ausnehmungen 12-14 gebracht werden. Hierdurch können die Schaltstangen 7 bzw. 8 mit der Schaltgabel 4 bzw. der Schiebemuffe 1 gekoppelt werden. Die Schiebemuffe 1 kann also durch Ansteuern der Aktuatoren 9 bzw. 10 über die Schaltstangen 7 bzw. 8 axial verschoben werden.

Ein wesentlicher Unterschied gegenüber dem Stand der Technik besteht darin, dass der Schaltgabel 4 zwei separate "Betätigungseinrichtungen", d.h. zwei Schaltstangen 7, 8 zugeordnet sind. Die Schaltgabel 4 kann also sowohl über die Schaltstange 7 als auch über die Schaltstange 8 geschaltet werden.

Bei einem Getriebe sind üblicherweise mehrere durch Schiebemuffen gebildete Schaltgassen koaxial hintereinander angeordnet. Die beiden Schaltstangen 7, 8 können dann mehreren koaxial angeordneten Schaltgabeln bzw. Schaltschwingen zugeordnet sein. Da zwei Schaltstangen 7, 8 vorgesehen sind, können somit gleichzeitig zwei koaxial angeordnete "Schaltkörper", d.h. Schaltgabeln bzw. Schaltschwingen betätigt werden und zwar gleichzeitig in entgegengesetzten Richtungen.

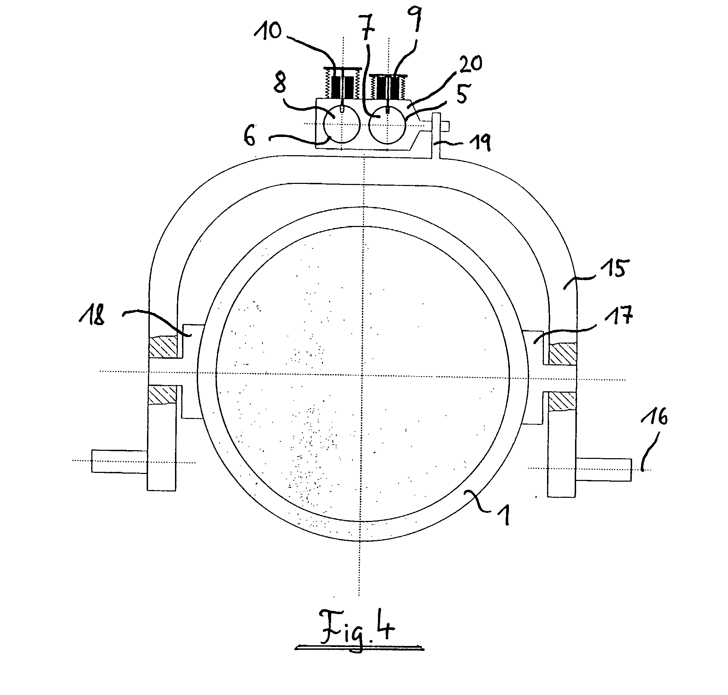

Die beiden Schaltstangen 7, 8 können entweder völlig unabhängig voneinander ansteuerbar sein oder mechanisch gekoppelt sein, was im Zusammenhang mit den Figuren 5-8 noch näher erläutert wird.

**Figur 4** zeigt ein Ausführungsbeispiel, bei dem die Schiebemuffe 1 mittels einer U-förmigen Schaltschwinge 15 axial verschieblich ist. Die Schaltschwinge 15 ist schwenkbar um eine Achse 16 im Getriebe gelagert. In den einander gegenüberliegenden Schenkeln der Schaltschwinge 15 sind Gleitsteine 17, 18 vorgesehen, welche in die umlaufende Nut 3 (vgl. Figur 1) eingreifen und beim Verschwenken der Schaltschwinge 15 die Schiebemuffe in Axialrichtung mitnehmen. Am Querbügel der Schaltschwinge 15 ist ein Mitnehmerfinger 19 vorgesehen, der durch eine Schaltstangenführung 20 axial verschiebbar ist, was zum Verschwenken der Schaltschwinge 15 führt. Die Schaltstangenführung weist zwei Durchgangsbohrungen 5, 6 auf, durch die sich die beiden Schaltstangen 7, 8 hindurch erstrecken. Ferner sind entsprechend den Figuren 1-3 elektromagnetische Aktuatoren 9, 10 vorgesehen, die eine formschlüssige Kopplung der Schaltstangenführung mit einer der beiden Schaltstangen 7, 8 ermöglichen.

Die **Figuren 5-8** zeigen Ausführungsbeispiele der Erfindung, bei denen die Schaltstange 7, 8 jeweils über ein Kupplungselement mechanisch miteinander gekoppelt sind.

In **Figur 5** ist das Kupplungselement ein T- förmiger Hebel 21 der an einem Lager 22 schwenkbar im Getriebe gelagert ist und der über Gelenke 23, 24 mit den Schaltstangen 7, 8 und über ein Gelenk 25 mit einem Stellglied 26 gekoppelt ist. Das Stellglied 26 kann beispielsweise ein Hydraulik- bzw. Pneumatikzylinder oder ein Elektromotor sein.

Durch Betätigen des Stellglieds 26 können beide Schaltstangen axial verschoben werden. Da der Lagerpunkt 22 des Hebels 21 zwischen den beiden Schaltstangen 7, 8 liegt, werden diese jeweils in unterschiedlichen Richtungen verschoben.

**Figur 6** zeigt eine Variante der Figur 5 mit einem stangenartigen Hebel, der ebenfalls an einem Lager 21 im Getriebe gelagert und über Gelenke 23, 24 mit den Schaltstangen 7, 8 und über ein Gelenk 25 mit dem Stellglied 26 gekoppelt ist.

**Figur 7** zeigt ein Ausführungsbeispiel, bei dem das Stellglied 26 unmittelbar mit der Schaltstange 8 verbunden ist. Eine Axialbewegung der Schaltstange 8 wird über den stangenartigen Hebel 21 in eine entgegengesetzte Axialbewegung der Schaltstange 7 umgewandelt.

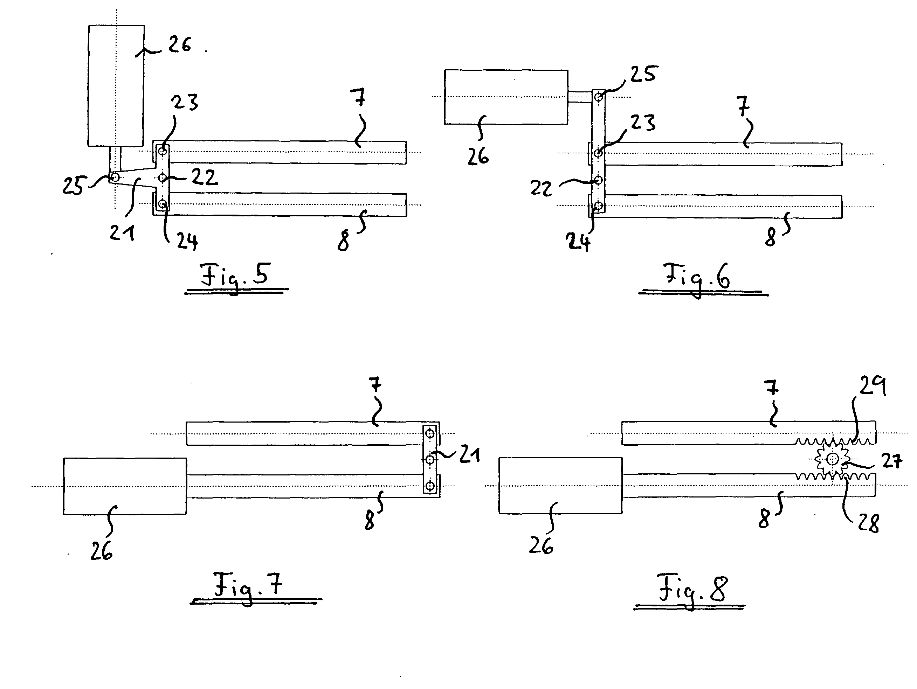

Bei dem Ausführungsbeispiel der **Figur 8** ist das "Kopplungselement" der beiden Schaltstangen 7, 8 ein Zahnrad 27, das mit Zahnstangenabschnitten 28, 29 der Schaltstangen 7, 8 kämmt. Eine über das Stellglied 26 in die Schaltstange 8 eingeleitete Axialbewegung wird über das Zahnrad 27 in eine entgegengesetzte Axialbewegung der Schaltstange 7 umgewandelt.

## Patentansprüche

1. Schaltgetriebe mit
mindestens einer Schaltgabel (4) oder einer Schaltschwinge (15) zum axialen Verschieben einer zugeordneten Schiebemuffe (1) und mindestens einer Schaltstange (7, 8) zum Betätigen der Schaltgabel (4) bzw. der Schaltschwinge (15), **dadurch gekennzeichnet, dass** der Schaltgabel (4) bzw. der Schaltschwinge (15) zwei separate Schaltstangen (7, 8) zugeordnet sind und die Schaltgabel (4) bzw. Schaltschwinge (15) wahlweise durch eine der beiden Schaltstangen (7, 8) betätigbar ist, wobei
der Schaltgabel (4) bzw. Schaltschwinge (15) zwei elektromagnetische Aktuatoren (9, 10) zugeordnet sind, zum Koppeln der Schaltgabel (4) oder Schaltschwinge (15) mit einer der beiden Schaltstangen (7, 8).

2. Schaltgetriebe nach Anspruch 1,
**dadurch gekennzeichnet, dass** zwei Schaltgabeln (4) oder Schaltschwingen (15) zum axialen Verschieben jeweils einer zugeordneten Schiebemuffe (1) vorgesehen sind und dass jeder der beiden Schaltgabeln (4) oder Schaltschwingen (15) jeweils zwei Aktuatoren (9, 10) zugeordnet sind und jede der beiden Schaltgabeln (4) bzw. Schaltschwingen (15) wahlweise mit einer der beiden Schaltstangen (7, 8) koppelbar ist.

3. Schaltgetriebe nach einem der voranstehenden Ansprüche,
**dadurch gekennzeichnet, dass** es bei jeder Schaltstange (7, 8) bezüglich der zugeordneten Aktuatoren (9, 10) mehrere Relativstellungen gibt, in denen die jeweilige Schaltgabel (4) bzw. Schaltschwinge (15) über den Aktuator (9, 10) mit der Schaltstange (7, 8) gekoppelt ist.

4. Schaltgetriebe nach einem der voranstehenden Ansprüche,
**dadurch gekennzeichnet, dass** jedem Aktuator (9, 10) an jeder Schaltstange (7, 8) mehrere Ausnehmungen (12-14) zugeordnet sind, in die der Aktuator (9, 10) eingreifen kann.

5. Schaltgetriebe nach Ansprüchen 3 und 4,
**dadurch gekennzeichnet, dass** die Anzahl der Ausnehmungen (12-14), die einem Aktuator (9, 10) zugeordnet sind, der Anzahl der möglichen Schaltstellungen der jeweiligen Schaltgabel (4) bzw. Schaltschwinge (15) entspricht.

6. Schaltgetriebe nach einem der voranstehenden Ansprüche,
**dadurch gekennzeichnet, dass** die Schaltstangen (7, 8) unabhängig voneinander betätigbar sind.

7. Schaltgetriebe nach einem der voranstehenden Ansprüche,
**dadurch gekennzeichnet, dass** die Schaltstangen (7, 8) gleichzeitig aber stets nur gegenläufig betätigbar sind.

8. Schaltgetriebe nach einem der voranstehenden Ansprüche,
**dadurch gekennzeichnet, dass** die Schaltstangen (7, 8) durch ein einziges Stellglied (26) betätigbar sind.

9. Schaltgetriebe nach einem der voranstehenden Ansprüche,
**dadurch gekennzeichnet, dass** die Schaltstangen (7, 8) durch ein mechanisches Kopplungselement (21, 27) miteinander gekoppelt sind.

10. Schaltgetriebe nach Anspruch 9,
**dadurch gekennzeichnet, dass** das Kopplungselement (21) ein Schwenkhebel ist, der an einem Lagerpunkt (22) im Getriebe gelagert ist und der über Schwenkgelenke (23, 24) mit den Schaltstangen (7, 8) verbunden ist.

11. Schaltgetriebe nach Anspruch 9,
**dadurch gekennzeichnet, dass** das Kopplungselement (27) ein Zahnrad ist, das in zugeordnete Zahnstangenabschnitte (28, 29) der Schaltstangen (7, 8) eingreift.

12. Schaltgetriebe nach Anspruch 8,
**dadurch gekennzeichnet, dass** das Stellglied (26) ein Hydraulikzylinder ist.

13. Schaltgetriebe nach Anspruch 8,
**dadurch gekennzeichnet, dass** das Stellglied (26) ein elektrischer Stellmotor ist.

## Claims

1. A gearshift mechanism comprising
at least one shift fork (4) or shift rocker arm (15) for axially shifting an associated sliding sleeve (1) and at least one selector shaft (7, 8) for operating the shift fork (4) or rocker arm (15), **characterised in that** the shift fork (4) or rocker arm (15) is associated with two separate selector shafts (7, 8) and the shift fork (4) or rocker arm (15) can be actuated at choice by one or the other selector shafts (7, 8), wherein the shift fork (4) or rocker arm (15) is associated with two electro-magnetic actuators (9, 10) for coupling the shift fork (4) or rocker arm (15) to one of the two selector shafts (7, 8).

2. A gearshift mechanism according to claim 1, **characterised in that** two shift forks (4) or rocker arms (15) are provided for axially shifting a respective associated sliding sleeve (1) and each of the two shift forks (4) or rocker arms (15) is associated with two respective actuators (9, 10) and each of the two shift forks (4) or rocker arms (15) can be coupled at choice with one of the two selector shafts (7, 8).

3. A gearshift mechanism according to any of the preceding claims, **characterised in that** each selector shaft (7, 8) has a number of positions relative to the associated actuators (9, 10) in which the respective shift fork (4) or rocker arm (15) is coupled via the actuator (9, 10) to the selector shaft (7, 8).

4. A gearshift mechanism according to any of the preceding claims, **characterised in that** each actuator (9, 10) on each selector shafts (7, 8) is associated with a number of recesses (12 - 14) in which the actuator (9, 10) can engage.

5. A gearshift mechanism according to claims 3 and 4, **characterised in that** the number of recesses (12 - 14) associated with each actuator (9, 10) is equal to the number of possible shift positions of the respective shift fork (4) or rocker arm (15).

6. A gearshift mechanism according to any of the preceding claims, **characterised in that** the selector shafts (7, 8) can be actuated independently of one another.

7. A gearshift mechanism according to any of the preceding claims, **characterised in that** the selector shafts (7, 8) can be actuated simultaneously but always only in opposite directions.

8. A gearshift mechanism according to any of the preceding claims, **characterised in that** the selector shafts (7, 8) can be actuated by a single servo-component (26).

9. A gearshift mechanism according to any of the preceding claims, **characterised in that** the selector shafts (7, 8) are coupled to one another by a mechanical coupling element (21, 27).

10. A gearshift mechanism according to claim 9, **characterised in that** the coupling element (21) is a rocking lever mounted in the gear unit at a mounting point (22) and connected by swivel joints (23, 24) to the selector shafts (7, 8).

11. A gearshift mechanism according to claim 9, **characterised in that** the coupling element (27) is a toothed wheel which engages in associated rack portions (28, 29) of the selector shafts (7, 8).

12. A gearshift mechanism according to claim 8, **characterised in that** the servo-component (26) is a hydraulic cylinder.

13. A gearshift mechanism according to claim 8, **characterised in that** the servo-component (26) is an electric servo-motor.

## Revendications

1. Boîte de vitesses comportant
au moins une fourchette de changement de vitesses (4) ou une bielle de changement de vitesses (15) pour déplacer axialement un manchon coulissant (1) associé et
au moins une tringle de changement de vitesses (7, 8) pour manoeuvrer la fourchette (4) ou la bielle (15),
**caractérisée en ce que**
deux tringles (7, 8) distinctes sont associées à la fourchette (4) ou à la bielle de changement de vitesses (15)
et la fourchette (4) ou la bielle (15) peuvent être manoeuvrées à volonté par une des deux tringles (7, 8),
deux actionneurs (9, 10) électromagnétiques étant associés à la fourchette (4) ou à la bielle (15) pour coupler la fourchette (4) ou la bielle (15) à l'une des deux tringles (7, 8).

2. Boîte de vitesses selon la revendication 1,
**caractérisée en ce que**
on prévoit deux fourchettes de changement de vitesses (4) ou bielles de changement de vitesses (15) pour déplacer axialement un manchon coulissant (1) associé respectivement et
deux actionneurs (9, 10) sont respectivement associés à chacune des deux fourchettes (4) ou bielles (15) et
chacune des deux fourchettes (4) ou bielles (15) peut être couplée à volonté à l'une des deux tringles (7, 8).

3. Boîte de vitesses selon l'une des revendications précédentes,
**caractérisée en ce que**,
concernant les actionneurs (9, 10) associés, il existe pour chaque tringle de changement de vitesses (7, 8) plusieurs positions relatives dans lesquelles la fourchette de changement de vitesses (4) ou bielle de changement de vitesses (15) concernée est couplée à la tringle (7, 8) par l'intermédiaire de l'actionneur (9, 10).

4. Boîte de vitesses selon l'une des revendications précédentes,
**caractérisée en ce que**
plusieurs creux (12 à 14) dans lesquels l'actionneur (9, 10) peut avoir prise sont associés à chaque actionneur (9, 10) sur chaque tringle de changement de vitesses (7, 8).

5. Boîte de vitesses selon les revendications 3 et 4,
**caractérisée en ce que**
le nombre des creux (12 à 14) associés à un actionneur (9, 10) correspond au nombre des positions de commande possibles de la fourchette de changement de vitesses (4) ou de la bielle de changement de vitesses (15) concernée.

6. Boîte de vitesses selon l'une des revendications précédentes,
**caractérisée en ce que**
les tringles de changement de vitesses (7, 8) peuvent être manoeuvrées indépendamment l'une de l'autre.

7. Boîte de vitesses selon l'une des revendications précédentes,
**caractérisée en ce que**
les tringles de changement de vitesses (7, 8) peuvent être manoeuvrées en même temps mais toujours uniquement en sens contraire.

8. Boîte de vitesses selon l'une des revendications précédentes,
**caractérisée en ce que**
les tringles de changement de vitesses (7, 8) peuvent être manoeuvrées par un seul actionneur (26).

9. Boîte de vitesses selon l'une des revendications précédentes,
**caractérisée en ce que**
les tringles de changement de vitesses (7, 8) sont couplées l'une à l'autre par un élément de couplage (21, 27) mécanique.

10. Boîte de vitesses selon la revendication 9,
**caractérisée en ce que**
l'élément de couplage (21) est un levier pivotant monté dans la boîte de vitesses à un point d'appui (22) et relié aux tringles de changement de vitesses (7, 8) par l'intermédiaire d'articulations pivotantes (23, 24).

11. Boîte de vitesses selon la revendication 9,
**caractérisée en ce que**
l'élément de couplage (27) est une roue dentée qui a prise dans des segments de crémaillère (28, 29) associés des tringles de changement de vitesses (7, 8).

12. Boîte de vitesses selon la revendication 8,
**caractérisée en ce que**
l'actionneur (26) est un vérin hydraulique.

13. Boîte de vitesses selon la revendication 8,
**caractérisée en ce que**
l'actionneur (26) est un moteur de commande électrique.
